# EUROPÄISCHE PATENTANMELDUNG

(11) **EP 2 244 206 A2**
(43) Veröffentlichungstag der Anmeldung: **27.10.2010**
(21) Anmeldenummer: 10405067.9
(22) Anmeldetag: 30.03.2010
(51) Int. Cl.: G06K 7/10, G06K 19/06, B42D 15/00, G07D 7/00, G06Q 10/00

(54) **Kennzeichen und Verfahren zur Prüfung der Authentizität eines Erzeugnisses**

(30) Priorität: 21.04.2009 CH 6382009
(71) Anmelder: Logistep AG, 6312 Steinhausen (CH)
(72) Erfinder: Oginski, Leszek, 6313 Edlibach (CH); Schneider, Richard M., 6313 Edlibach (CH)
(74) Vertreter: Ullrich, Gerhard

(57) **Zusammenfassung**

Das Kennzeichen (**C**₁ bis **C**ₙ) zur Prüfung der Authentizität eines Erzeugnisses (**P**₁ bis **P**ₙ) ist direkt auf oder am Erzeugnis (**P**₁ bis **P**ₙ) angebracht und optisch erfassbar. Das Kennzeichen (**C**₁ bis **C**ₙ) besteht aus einer Sequenz von grafischen Zeichen. Das dem Erzeugnis (**P**₁ bis **P**ₙ) zugeordnete Kennzeichen (**C**₁ bis **C**ₙ) individualisiert das Erzeugnis (**P**₁ bis **P**ₙ) als einzelnes Stück. Das Kennzeichen (**C**₁ bis **C**ₙ) ist aus Zahlen und/oder Schriftzeichen und/oder Sonderzeichen gebildet. Die Zahlen für das Kennzeichen (**C**₁ bis **C**ₙ) stammen aus dem Bereich 0 bis 9 und die Schriftzeichen zumindest aus einem Alphabet einer Sprache. Die Buchstaben können Klein- und/oder Grossbuchstaben umfassen. Das Kennzeichen (**C**₁ bis **C**ₙ) ist in zumindest einer Zeile (**Z**) oder zumindest einer Spalte (**S**) oder als ein Block in Zeilen und Spalten strukturiert. Das Kennzeichen (**C**₁ bis **C**ₙ) hat z.B. sechs Zeilen (**Z**) und sechs Spalten (**S**), wobei jede Zeile sechs Zeichen enthält. Ferner werden ein Verfahren zur Arbeit mit dem Kennzeichen (**C**₁ bis **C**ₙ) und die dabei eingesetzten Mittel offenbart.

## Beschreibung

### Anwendungsgebiet der Erfindung

Die Erfindung betrifft ein Kennzeichen zur Prüfung der Authentizität eines Erzeugnisses und ein dazu anwendbares Verfahren. Das Kennzeichen wird von einer autorisierten Stelle direkt auf oder am Erzeugnis angebracht, ist optisch erfassbar und besteht aus einer Sequenz von graphischen Zeichen.

Die fälschungssichere und damit eindeutige Authentifizierung von Produkten ist aufgrund der stetig zunehmenden Produktfälschungen ein elementares Bedürfnis aller loyalen Produzenten und Erfordernis für einen wirksamen Konsumentenschutz. Dabei stehen für kriminelle Fälscher die Zweige Konsumgüter, Software, Musik, Werkzeuge/Ersatzteile und die Pharmazie im Vordergrund. Die betroffenen Produkte sind z.B. Textilien, Uhren, Parfüm, Raubkopien, Bremsbeläge und Medikamente, wobei insbesondere Fälschungen bei letztgenannten für die Verbraucher höchst gefährlich sein können. Produktfälschungen verursachen jährlich volkswirtschaftliche Schäden in Milliardenbeträgen. Schätzungen gehen davon aus, dass der Aufwand zur Bekämpfung von Produktfälschungen bis 2012 jährlich weltweit um ca. 13 Prozent steigen wird.

### Stand der Technik

Die Strategien zur Fälschungserkennung und -abschreckung beruhen mehrheitlich auf offener oder versteckter Kennzeichnung der entsprechenden Produkte. Dabei kommen Markierungen in Form von Wasserzeichen, Barcodes, Hologrammen oder RFID-Tags (Radio Frequency Identification) in Betracht.

Auf der Homepage www.protexxion.de (Aufruf vom 14.04.2009) der Bayer Technology Services werden unter der Rubrik Lösungen verschiedene laseroptische Verfahren beschrieben, bei denen keine zusätzliche Kennzeichnung erforderlich ist, da das Produkt selbst zur Markierung wird. Dabei werden die Oberflächen mittels Laser abgetastet und eindeutig erkannt, worüber eine fälschungssichere Authentifizierung der Produkte ermöglicht wird. Die erfassten Merkmale sind praktisch einzigartig wie eine DNS-Sequenz und können weder gefälscht noch kopiert werden. Selbst moderate Oberflächenveränderungen, z.B. Verkratzen oder Knickungen, beeinträchtigen die Erkennung nicht.

In einer ersten Ausführung, z.B. bei grossen Stückzahlen, werden bei der Produktion oder der Verpackung die Scaninformationen zusammen mit einer eindeutigen Seriennummer in einer Datenbank abgelegt, die sich danach jederzeit mit einer Such- oder Vergleichssoftware wieder abrufen und mit aktuellen Scans, z.B. während der Distribution, im Einzelhandel oder beim Kunden, vergleichen lassen.

Bei kleinen Stückzahlen oder häufig wechselnden Objekten lohnt sich oft die Modifikation der Produktions- oder Verpackungsmaschinen nicht, so dass hier in einer zweiten Ausführung die Scaninformationen wiederum zusammen mit einer Seriennummer in einer Datenbank enthalten sind, zusätzlich aber noch mittels eines selbstklebenden Etiketts auf dem Produkt angebracht werden. Einmal aufgebracht, lässt sich das Etikett vom Produkt nicht mehr unzerstört entfernen, so dass Produkt und Etikett eine untrennbare Einheit bilden. Mit einem mobilen Scanner lässt sich die Oberflächeninformation jederzeit und überall erneut erfassen, wobei der nachfolgende Vergleich mit dem in der Datenbank vorhandenen Primärscan die Authentifizierung des Produkts erlaubt.

In einer dritten Ausführung ist das gescannte Produkt gleichzeitig der Datenträger für die codierte Scaninformation, so dass die beim Primärscan gewonnenen Informationen nicht in einer Datenbank abgelegt werden, sondern direkt am Produkt z.B. mittels Barcode oder eines RFID-Chips angebracht werden. Damit liefert ausschliesslich beim Originalprodukt ein erneuter Scan genau die Information, die dem aufgebrachten Datensatz entspricht und somit die Echtheit des Produkts bestätigt.

### Aufgabe der Erfindung

Angesichts der bisher bekannten, zumeist offenen oder verstecken Kennzeichen sowie der aufwendigen Laserabtastung und der damit verbundenen Prüfung der Authentizität von Erzeugnissen liegt der Erfindung die Aufgabe zugrunde, ein vereinfachtes sowie funktional vielfältiges Kennzeichen und ein Verfahren vorzuschlagen, was der Prüfung der Authentizität eines Erzeugnisses dient und anhand einfacherer Hilfsmittel durchführbar ist.

### Übersicht über die Erfindung

Das Kennzeichen dient zur Prüfung der Authentizität eines Erzeugnisses, wobei das Kennzeichen direkt auf oder am Erzeugnis angebracht und optisch erfassbar ist. Das Kennzeichen besteht aus einer Sequenz von graphischen Zeichen. Das dem Erzeugnis zugeordnete Kennzeichen individualisiert das Erzeugnis als einzelnes Stück.

Die nachfolgenden Merkmale beziehen sich auf spezielle Ausführungen des erfindungsgemässen Kennzeichens: Das Kennzeichen ist aus Zahlen und/oder Schriftzeichen und/oder Sonderzeichen gebildet.

Die Zahlen für das Kennzeichen stammen aus dem Bereich 0 bis 9 und die Schriftzeichen zumindest aus einem Alphabet einer Sprache.

Die Buchstaben können Klein- und/oder Grossbuchstaben umfassen.

Das Kennzeichen ist in zumindest einer Zeile oder zumindest einer Spalte oder als ein Block in Zeilen und Spalten strukturiert.

Das Kennzeichen hat z.B. sechs Zeilen und sechs Spalten, wobei jede Zeile sechs Zeichen enthält.

Im Kennzeichen können Bestandteile zu Detailangaben über das Erzeugnis und/oder den Hersteller und/oder den Herstellungsort und/oder den Herstellungszeitpunkt enthalten sein.

Das Kennzeichen wird vorteilhaft in einem Generator, z.B. einem UUID-Generator, erzeugt.

Das Kennzeichen ist direkt auf das Erzeugnis oder auf eine das Erzeugnis umgebende Verpackung oder auf einem dem Erzeugnis zugeordneten Etikett oder Begleitpapier aufgebracht.

Das Verfahren zur Prüfung der Authentizität eines Erzeugnisses unter Verwendung eines Kennzeichens mit der obigen Beschaffenheit umfasst folgende Schritte:
- auf Anforderung wird das Kennzeichen von einem Generator bereitgestellt und als bereitgestelltes Kennzeichen in einer Zentrale gespeichert;
- bevor das Erzeugnis auf den Markt gelangt, wird das vom Generator erhaltene Kennzeichen von einer autorisierten Stelle, z.B. einem Hersteller, am Erzeugnis angebracht;
- eine Prüfstelle erfasst das Kennzeichen am Erzeugnis;
- die Prüfstelle übermittelt das erfasste Kennzeichen an die Zentrale zur Verifizierung, ob das von der Prüfstelle übermittelte Kennzeichen in der Zentrale nachweisbar ist;
- als Ergebnis der Verifizierung wird der Prüfstelle mitgeteilt, ob das von der Prüfstelle erfasste Kennzeichen in der Zentrale enthalten ist, wobei
- ist das erfasste Kennzeichen in der Zentrale nachweisbar, ergibt sich daraus die Echtheit des Erzeugnisses; oder
- ist das erfasste Kennzeichen in der Zentrale nicht nachweisbar, lässt sich daraus auf ein plagiiertes Erzeugnis schliessen.

Die nachfolgenden Details beziehen sich auf spezielle Ausführungen des angewendeten Verfahrens: Ein zentraler Generator ist der Zentrale zugeordnet oder jeder autorisierten Stelle ist ein separater Generator zugeordnet.

Jeder autorisierten Stelle ist ein separater Server zugeordnet, der die angeforderten Kennzeichen vom zentralen Generator oder von einem der betreffenden autorisierten Stelle zugeordneten separaten Generator erhält und speichert.

Das für das Erzeugnis zu dessen Individualisierung verwendete Kennzeichen wird von der autorisierten Stelle auf dem der jeweiligen autorisierten Stelle zugeordneten Server gespeichert und von diesem Server bei der Zentrale registriert.

Die Erfassung des Kennzeichens am Erzeugnis durch die Prüfstelle erfolgt durch visuelles Ablesen oder fotografisch. Die Übermittlung des am Erzeugnis erfassten Kennzeichens von der Prüfstelle an die Zentrale erfolgt mündlich bzw. fernmündlich oder elektronisch. Das Ergebnis der Verifizierung wird von der Zentrale an die Prüfstelle mündlich bzw. fernmündlich oder elektronisch übermittelt.

Die Erfassung des Kennzeichens am Erzeugnis durch die Prüfstelle erfolgt durch Ablesen mittels eines Mobiltelefons mit integrierter Digitalkamera. Die Übermittlung des am Erzeugnis erfassten Kennzeichens von der Prüfstelle an die Zentrale erfolgt via das GSM (Global System for Mobile Communications) per SMS (Short Message Service) oder MMS (Multimedia Messaging Service). Das Ergebnis der Verifizierung von der Zentrale an die Prüfstelle wird via das GSM (Global System for Mobile Communications), z.B. wiederum per SMS (Short Message Service) oder MMS (Multimedia Messaging Service), übermittelt.

### Kurzbeschreibung der beigefügten Zeichnungen

Es zeigen:

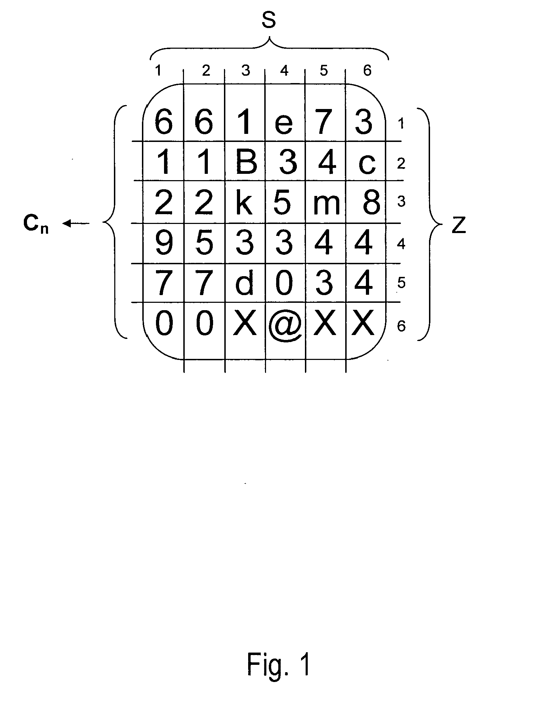

- Figur 1: einen exemplarischen Aufbau des erfindungsgemässen Kennzeichens;
- Figur 2: ein Schaltbild zur Prüfung der Authentizität eines Erzeugnisses, in einer ersten Ausführungsform; und

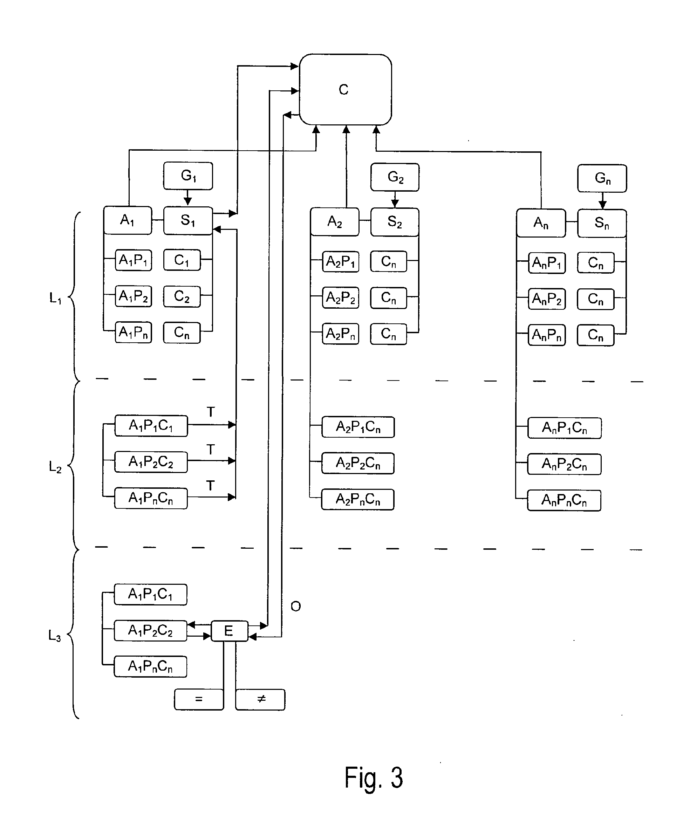

- Figur 3: das Schaltbild gemäss Figur 2, in einer zweiten Ausführungsform.

### Ausführungsbeispiel

Mit Bezug auf die beiliegenden Zeichnungen erfolgen nachstehend die detaillierte Beschreibung eines Ausführungsbeispiels zum erfindungsgemässen Kennzeichen zur Prüfung der Authentizität eines Erzeugnisses und zum mit dem Kennzeichen angewendeten Verfahren.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden oder nachfolgenden Figurenbeschreibungen Bezug genommen. Im Interesse der Übersichtlichkeit wird auf die wiederholte Bezeichnung von Bauteilen in weiteren Figuren zumeist verzichtet, sofern zeichnerisch eindeutig erkennbar ist, dass es sich um "wiederkehrende" Bauteile handelt.

### Figur 1

Das Kennzeichen **Cₙ** dient zur Prüfung der Authentizität eines Erzeugnisses und besteht aus einer Sequenz von Zeichen. Das Kennzeichen **Cₙ** ist hier aus Zahlen und Schrift- sowie Sonderzeichen gebildet. Die Zahlen für das Kennzeichen **Cₙ** stammen aus dem Bereich 0 bis 9 und die Schriftzeichen stammen zumindest aus einem Alphabet einer Sprache. Die Buchstaben umfassen Klein- und/oder Grossbuchstaben. Das Kennzeichen **Cₙ** ist in einem Block angeordnet, der aus sechs Zeilen **Z** und sechs Spalten **S** besteht, wobei jede Zeile **Z** sechs Zeichen enthält. Das Kennzeichen **Cₙ** kann Bestandteile zur Angabe von Erzeugnis und/oder Hersteller und/oder Herstellungsort und/oder Herstellungszeitpunkt enthalten. Das Kennzeichen **Cₙ** ist in einem Generator, z.B. einem UUID-Generator, erzeugt. Die Eindeutigkeit für ein generiertes Kennzeichen **Cₙ** ist nicht garantiert, jedoch ist die Gesamtzahl der eindeutigen Kennzeichen **Cₙ** mit 2¹²⁸ oder 4,4028•10³⁸ so gross, dass die Wahrscheinlichkeit der Erzeugung zwei gleicher Kennzeichen **Cₙ** gegen Null geht.

### Figur 2

Das Flussdiagramm zeigt die einzelnen Verfahrensschritte, die zur Prüfung der Authentizität eines Erzeugnisses **P₁** bis **Pₙ,** anhand eines daran angebrachten Kennzeichens **C₁** bis **Cₙ** durchgeführt werden.

Der Zentrale **C** ist ein zentraler Generator **G_{c}** und jeder autorisierten Stelle **A₁** bis **An** - z.B. ein Hersteller -, ist ein separater Server **S₁** bis **Sₙ** zugeordnet. Innerhalb des Levels **L₁** wird auf Anforderung das Kennzeichen **C₁** bis **Cₙ** von dem zentralen Generator **G_{c}** bereitgestellt und als bereitgestelltes Kennzeichen **C₁** bis **Cₙ** in der Zentrale **C** sowie im Server **S₁** bis **Sₙ** gespeichert.

Bevor das Erzeugnis **P₁** bis **Pₙ** auf den Markt gelangt wird das vom zentralen Generator **G_{c}** erhaltene Kennzeichen **C₁** bis **Cₙ** innerhalb des Levels **L₂** von der autorisierten Stelle **A₁** bis **Aₙ** am Erzeugnis **P₁** bis **Pₙ** angebracht. Das Kennzeichen **C₁** bis **Cₙ** ist optisch erfassbar und entweder direkt auf das Erzeugnis **P₁** bis **Pₙ** oder auf eine das Erzeugnis **P₁** bis **Pₙ** umgebende Verpackung oder auf einem dem Erzeugnis **P₁** bis **Pₙ** zugeordneten Etikett oder Begleitpapier aufgebracht. Das dem Erzeugnis **P₁** bis **Pₙ** zugeordnete Kennzeichen **C₁** bis **Cₙ** individualisiert das Erzeugnis **P₁** bis **Pₙ** als einzelnes Stück. Das Kennzeichen **C₁** bis **Cₙ** wird von der autorisierten Stelle **A₁** bis **Aₙ** auf deren zugeordneten Server **S₁** bis **Sₙ** gespeichert und von diesem Server **S₁** bis **Sₙ** bei der Zentrale **C** registriert. Anschliessend wird das mit dem Kennzeichen **C₁** bis **Cₙ** versehene Erzeugnis **P₁** bis **Pₙ** auf den Markt gebracht.

Auf dem Markt, symbolisiert durch den Level **L₃**, erfolgt die Erfassung des Kennzeichens **C₁** bis **Cₙ**; **Cₓ** am Erzeugnis **P₁** bis **Pₙ**; **Pₓ** durch die Prüfstelle **E** durch visuelles Ablesen oder fotografisch. Bei der Erfassung des Kennzeichens **C₁** bis **Cₙ**; **Cₓ** am Erzeugnis **P₁** bis **Pₙ**; **Pₓ** kann es sich z.B. bei der Prüfstelle **E** um eine Person mit einem Mobiltelefon mit integrierter Digitalkamera handeln. Die Prüfstelle **E** übermittelt das am Erzeugnis **P₁** bis **Pₙ**; **Pₓ** erfasste Kennzeichen **C₁** bis **Cₙ**; **Cₓ** in Form einer mündlichen bzw. fernmündlichen oder elektronischen Anfrage an die Zentrale **C** zur Verifizierung, ob das von der Prüfstelle **E** übermittelte Kennzeichen **C₁** bis **Cₙ**; **Cₓ** in der Zentrale **C** nachweisbar ist. Als Ergebnis **O** der Verifizierung wird der Prüfstelle **E** mündlich bzw. fernmündlich oder elektronisch mitgeteilt, ob das von der Prüfstelle **E** erfasste Kennzeichen **C₁** bis **Cₙ**; **Cₓ** in der Zentrale **C** enthalten ist. Ist das erfasste Kennzeichen **C₁** bis **Cₙ** in der Zentrale **C** nachweisbar, ergibt sich daraus die Echtheit des Erzeugnisses **P₁** bis **Pₙ.** Wenn das erfasste Kennzeichen **Cₓ** in der Zentrale **C** nicht nachweisbar ist, lässt sich daraus auf ein plagiiertes Erzeugnis **Pₓ** schliessen.

Die Übermittlung von der Prüfstelle **E** an die Zentrale **C** sowie von der Zentrale **C** an die Prüfstelle **E** kann auf unterschiedlichen Übertragungstechniken beruhen. Insbesondere kommen hierfür vorteilhaft in Betracht:
GSM (Global System for Mobile Communications) ist ein Standard für volldigitale Mobilfunknetze, der hauptsächlich für Telefonie, aber auch für leitungsvermittelte und paketvermittelte Datenübertragung sowie Kurzmitteilungen benutzt wird.
SMS (Short Message Service = Kurznachrichtendienst) ist ein Telekommunikationsdienst zur Übertragung von formatlosen Textnachrichten. Der Inhalt der Nachricht ist auf 160 Zeichen begrenzt, jedoch können mehrere Nachrichten miteinander verknüpft werden.
MMS (Multimedia Messaging Service) ist eine Weiterentwicklung des SMS und bietet die Möglichkeit, mit einem Mobiltelefon multimediale Nachrichten, z.B. einfache Texte, komplexe Dokumente, Bilder und Videosequenzen, an andere Endgeräte oder an Email-Adressen zu versenden.

### Figur 3

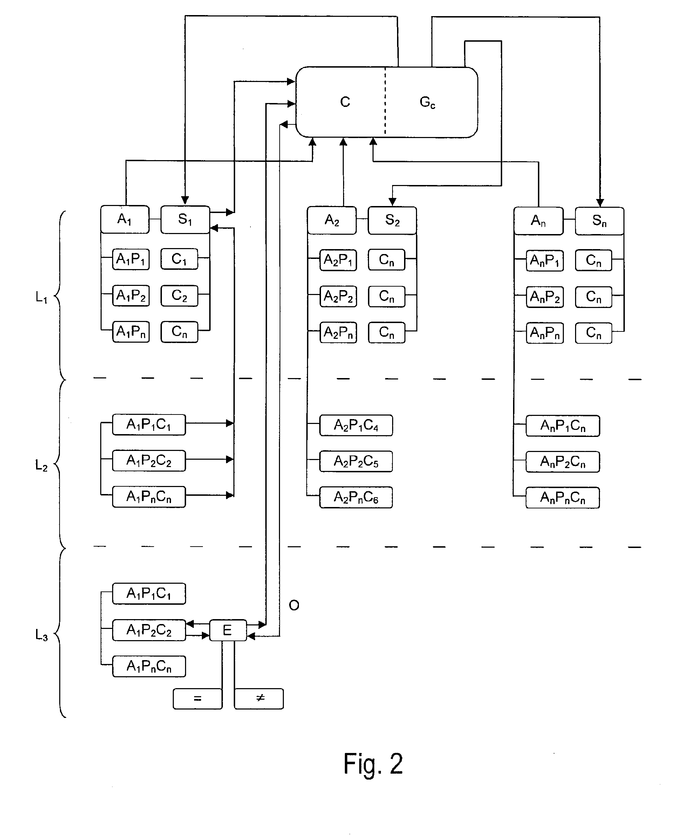

Die einzelnen Verfahrensschritte stimmen mit dem Schaltbild aus Figur 2 im wesentlichen überein, wobei nun jeder autorisierten Stelle **A₁** bis **Aₙ** - z.B. einem Hersteller - ein separater Generator **G₁** bis **Gₙ** zugeordnet ist. Jede autorisierte Stelle **A₁** bis **Aₙ** besitzt weiterhin einen separaten Server **S₁** bis **Sₙ.** Die autorisierte Stelle **A₁** bis **Aₙ** verfügt mittels dem separaten Generator **G₁** bis **Gₙ** selbst über das Kennzeichen **C₁** bis **Cₙ,** wobei das bereitgestellte Kennzeichen **C₁** bis **Cₙ** in der Zentrale **C** sowie dem Server **S₁** bis **Sₙ** gespeichert ist. Dazu erfolgt von der autorisierten Stelle **A₁** bis **Aₙ** an die Zentrale **C** eine Meldung, die eine Generierung des Kennzeichens **C₁** bis **Cₙ** anzeigt. Bevor das Erzeugnis **P₁** bis **Pₙ** auf den Markt gelangt wird das vom separaten Generator **G₁** bis **Gₙ** erhaltene Kennzeichen **C₁** bis **Cₙ** von der autorisierten Stelle **A₁** bis An am Erzeugnis **P₁** bis **Pₙ** angebracht.

## Patentansprüche

1. Kennzeichen (**C₁** bis **Cₙ**) zur Prüfung der Authentizität eines Erzeugnisses (**P₁** bis **Pₙ**), wobei:
a) das Kennzeichen (**C₁** bis **Cₙ**) direkt auf oder am Erzeugnis (**P₁** bis **Pₙ**) angebracht ist;
b) das Kennzeichen (**C₁** bis **Cₙ**) optisch erfassbar ist; und
c) das Kennzeichen (**C₁** bis **Cₙ**) aus einer Sequenz von graphischen Zeichen besteht, **dadurch gekennzeichnet, dass**
d) das dem Erzeugnis (**P₁** bis **Pₙ**) zugeordnete Kennzeichen (**C₁** bis **Cₙ**) das Erzeugnis (**P₁** bis **Pₙ**) als einzelnes Stück individualisiert.

2. Kennzeichen (**C₁** bis **Cₙ**) nach Anspruch 1, **dadurch gekennzeichnet, dass** das Kennzeichen (**C₁** bis **Cₙ**) aus Zahlen und/oder Schriftzeichen und/oder Sonderzeichen gebildet ist.

3. Kennzeichen (**C₁** bis **Cₙ**) nach zumindest einem der Ansprüche 1 und 2, **dadurch gekennzeichnet, dass** die Zahlen für das Kennzeichen (**C₁** bis **Cₙ**) aus dem Bereich 0 bis 9 und die Schriftzeichen zumindest aus einem Alphabet einer Sprache stammen.

4. Kennzeichen (**C₁** bis **Cₙ**) nach zumindest einem der Ansprüche 1 bis 3, **dadurch gekennzeichnet, dass** die Buchstaben Klein- und/oder Grossbuchstaben umfassen.

5. Kennzeichen (**C₁** bis **Cₙ**) nach zumindest einem der Ansprüche 1 bis 4, **dadurch gekennzeichnet, dass** das Kennzeichen (**C₁** bis **Cₙ**) in zumindest einer Zeile (**Z**) oder zumindest einer Spalte (**S**) oder als ein Block in Zeilen (**Z**) und Spalten (**S**) strukturiert ist.

6. Kennzeichen (**C₁** bis **Cₙ**) zumindest einem der Ansprüche 1 bis 5, **dadurch gekennzeichnet, dass** das Kennzeichen (**C₁** bis **Cₙ**) in sechs Zeilen (**Z**) und sechs Spalten (**S**) strukturiert ist, wobei jede Zeile (**Z**) sechs Zeichen enthält.

7. Kennzeichen (**C₁** bis **Cₙ**) nach zumindest einem der Ansprüche 1 bis 6, **dadurch gekennzeichnet, dass** das Kennzeichen (**C₁** bis **Cₙ**) Bestandteile zur Angabe von Erzeugnis und/oder Hersteller und/oder Herstellungsort und/oder Herstellungszeitpunkt enthält.

8. Kennzeichen (**C₁** bis **Cₙ**) nach zumindest einem der Ansprüche 1 bis 7, **dadurch gekennzeichnet, dass** das Kennzeichen (**C₁** bis **Cₙ**) in einem Generator (**G_{c}, G₁** bis **Gₙ**), z.B. einem UUID-Generator, erzeugt ist.

9. Kennzeichen (**C₁** bis **Cₙ**) nach zumindest einem der Ansprüche 1 bis 8, **dadurch gekennzeichnet, dass** das Kennzeichen (**C₁** bis **Cₙ**) direkt auf das Erzeugnis (**P₁** bis **Pₙ**) oder auf eine das Erzeugnis (**P₁** bis **Pₙ**) umgebende Verpackung oder auf einem dem Erzeugnis (**P₁** bis **Pₙ**) zugeordneten Etikett oder Begleitpapier aufgebracht ist.

10. Verfahren zur Prüfung der Authentizität eines Erzeugnisses (**P₁** bis **Pₙ**; **Pₓ**) unter Verwendung eines Kennzeichens (**C₁** bis **Cₙ**; **Cₓ**) gemäss zumindest einem der Ansprüche 1 bis 9, mit folgenden Schritten:
a) auf Anforderung wird das Kennzeichen (**C₁** bis **Cₙ**) von einem Generator (**G_{c}, G₁** bis **Gₙ**) bereitgestellt und als bereitgestelltes Kennzeichen (**C₁** bis **Cₙ**) in einer Zentrale (**C**) gespeichert;
b) bevor das Erzeugnis (**P₁** bis **Pₙ**) auf den Markt gelangt, wird das vom Generator (**G_{c}**, **G₁** bis **Gₙ**) erhaltene Kennzeichen (**C₁** bis **Cₙ**) von einer autorisierten Stelle (**A₁** bis **Aₙ**), z.B. einem Hersteller, am Erzeugnis (**P₁** bis **Pₙ**) angebracht;
c) eine Prüfstelle (**E**) erfasst das Kennzeichen (**C₁** bis **Cₙ**; **Cₓ**) am Erzeugnis (**P₁** bis **Pₙ**; **Pₓ**);
d) die Prüfstelle (**E**) übermittelt das erfasste Kennzeichen (**C₁** bis **Cₙ**; **Cₓ**) an die Zentrale (**C**) zur Verifizierung, ob das von der Prüfstelle (**E**) übermittelte Kennzeichen (**C₁** bis **Cₙ**; **Cₓ**) in der Zentrale (**C**) nachweisbar ist;
e) als Ergebnis (**O**) der Verifizierung wird der Prüfstelle (**E**) mitgeteilt, ob das von der Prüfstelle (**E**) erfasste Kennzeichen (**C₁** bis **Cₙ**; **Cₓ**) in der Zentrale (**C**) enthalten ist, wobei
f) ist das erfasste Kennzeichen (**C₁** bis **Cₙ**) in der Zentrale (**C**) nachweisbar, ergibt sich daraus die Echtheit des Erzeugnisses (**P₁** bis **Pₙ**); oder
g) ist das erfasste Kennzeichen (**Cₓ**) in der Zentrale (**C**) nicht nachweisbar, lässt sich daraus auf ein plagiiertes Erzeugnis (**Pₓ**) schliessen.

11. Verfahren nach Anspruch 10, **dadurch gekennzeichnet, dass**
a) ein zentraler Generator (**G_{c}**) der Zentrale (**C**) zugeordnet ist; oder
b) jeder autorisierten Stelle (**A₁** bis **Aₙ**) ein separater Generator (**G₁** bis **Gₙ**) zugeordnet ist.

12. Verfahren nach Anspruch 11, **dadurch gekennzeichnet, dass** jeder autorisierten Stelle (**A₁** bis **Aₙ**) ein separater Server (**S₁** bis **Sₙ**) zugeordnet ist, der die angeforderten Kennzeichen (**C₁** bis **Cₙ**) vom zentralen Generator (**G_{c}**) oder von einem der betreffenden autorisierten Stelle (**A₁** bis **Aₙ**) zugeordneten separaten Generator (**G₁** bis **Gₙ**) erhält und speichert.

13. Verfahren nach zumindest einem der Ansprüche 10 bis 12, **dadurch gekennzeichnet, dass** das für das Erzeugnis (**P₁** bis **Pₙ**) zu dessen Individualisierung verwendete Kennzeichen (**C₁** bis **Cₙ**) von der autorisierten Stelle (**A₁** bis **Aₙ**):
a) auf dem der jeweiligen autorisierten Stelle (**A₁** bis **Aₙ**) zugeordneten Server (**S₁** bis **Sₙ**) gespeichert wird; und
b) von diesem Server (**S₁** bis **Sₙ**) bei der Zentrale (**C**) registriert wird.

14. Verfahren nach zumindest einem der Ansprüche 10 bis 13, **dadurch gekennzeichnet, dass**
a) die Erfassung des Kennzeichens (**C₁** bis **Cₙ**; **Cₓ**) am Erzeugnis (**P₁** bis **Pₙ**; **Pₓ**) durch die Prüfstelle (**E**) durch visuelles Ablesen oder fotografisch erfolgt;
b) die Übermittlung des am Erzeugnis (**P₁** bis **Pₙ**; **Pₓ**) erfassten Kennzeichens (**C₁** bis **Cₙ**; **Cₓ**) von der Prüfstelle (**E**) an die Zentrale (**C**) mündlich bzw. fernmündlich oder elektronisch erfolgt; und
c) das Ergebnis (**O**) der Verifizierung von der Zentrale (**C**) an die Prüfstelle (**E**) mündlich bzw. fernmündlich oder elektronisch übermittelt wird.

15. Verfahren nach zumindest einem der Ansprüche 10 bis 14, **dadurch gekennzeichnet, dass**
a) die Erfassung des Kennzeichens (**C₁** bis **Cₙ**; **Cₓ**) am Erzeugnis (**P₁** bis **Pₙ**; **Pₓ**) durch die Prüfstelle (**E**) durch Ablesen mittels eines Mobiltelefons mit integrierter Digitalkamera erfolgt;
b) die Übermittlung des am Erzeugnis (**P₁** bis **Pₙ**; **Pₓ**) erfassten Kennzeichens (**C₁** bis **Cₙ**; **Cₓ**) von der Prüfstelle (**E**) an die Zentrale (**C**) via das GSM (Global System for Mobile Communications) per SMS (Short Message Service) oder MMS (Multimedia Messaging Service) erfolgt; und
c) das Ergebnis (**O**) der Verifizierung von der Zentrale (**C**) an die Prüfstelle (**E**) via das GSM (Global System for Mobile Communications), z.B. wiederum per SMS (Short Message Service) oder MMS (Multimedia Messaging Service), übermittelt wird.
